# EUROPEAN PATENT SPECIFICATION

(11) **EP 2 409 787 B1**
(45) Date of publication and mention of the grant of the patent: **16.07.2014**
(21) Application number: 11008343.3
(22) Date of filing: 13.09.2007
(51) Int. Cl.: B07C 5/34, B65B 57/02, G01B 11/04

(54) **MACHINE FOR WRAPPING LOLLIPOPS**
MASCHINE ZUM EINWICKELN VON STIELBONBONS
MACHINE A EMBALLER LES SUCETTES

(43) Date of publication of application: 25.01.2012
(62) Divisional of application: 07017963.5
(73) Proprietor: CFS Weert B.V., 6006 RV Weert (NL)
(72) Inventor: De Roo, Ronald Lambertus Joseph Hendrikus, 5507 MG Veldhoven (NL)
(74) Representative: Wolff, Felix

(56) References cited:
- EP-A- 0 038 088
- EP-A1- 1 041 005
- EP-A2- 0 227 404
- GB-A- 2 165 644
- GB-A- 2 420 403
- US-A- 4 024 058

## Description

The present invention is related to a lollipop wrapping machine.

These machines are known from the state of the art and produce confectionary, e. g. lollipops at very high rates. These confectionaries are afterwards in many cases wrapped into paper or plastic films. An increase of the quality of the wrapping of a lollipop is a constant demand in this industry. GB-A-2 420 403 discloses a confectionary production machine comprising means for analyzing a product. US-B-4 024 058 discloses sorting and directing means for lollipop. EP-A-10 41 005 discloses sorting of lolipops and analyzing the wrapping.

It was the objective of the present invention to provide a lollipop wrapping machine, which maintains or increases a constant level of quality.

This problem is solved by a lollipop wrapping machine according to claim 1.

The invention is related to a lollipop wrapping machine. Such machines are known from the state of the art.

According to the present invention, this machine comprises means to analyze the wrapping of a lollipop.

The means to analyze the lollipop can check whether the lollipop is wrapped and, if it is wrapped whether the wrapping has been carried out correctly, which means whether the correct wrapping material is used and whether the lollipop is for example wrapped in its entirety. Furthermore, the means to analyze the wrapping can check whether sealings of the wrapping material which might be present are as desired. The wrapping material can be a single or a double film. The wrapping material can be formed; i.e. wrapped around the lollipop, twisted and/or folded. This twisting and/or folding can be secured by a seal or the like. The means can check the quality of these folding- and/or operations is adequately carried out.

If the lollipop is labeled, the means to analyze the lollipop can check whether a label is present and if yes, whether it is the right label.

Preferably, the means to analyze the lollipop and/or its wrapping provide a signal which is used to control a sorting process. The sorting can be carried out such, that lollipops and/or their wrapping, which do not meet a certain standard are sorted out. Furthermore, if different lollipops are produced on one machine, the signal can be used to sort the lollipops into certain groups after their production. Different lollipops according to the present invention are lollipops with a different consistency, shape and/or wrapping.

The means to analyze the lollipop can be any means known by a person skilled in the art which are capable of analyzing a certain property of a lollipop and/or its wrapping. Preferably, the means are vision systems, such as a camera, a radiation based surface scanner, such as a laser scanner, preferably a 2D-laser scanner, and/or radiation based volume scanners, for example roentgen sensors. These means determine for example a dimension, a shape, a colour, a surface structure, a temperature, a wrapping, a label, which is then preferably compared with a reference and based on this comparison even more preferably a sorting takes place.

The determined values are preferably stored in a data base associated with the inventive machine.

The analysis can be two-dimensional as well as three-dimensional.

According to a preferred embodiment of the present invention, a property is measured by the means to analyze a lollipop and compared to another measurement at the same lollipop and/or a reference value and that the sorting of the lollipops is made based on the outcome of this comparison.

Preferably, the inventive machine comprises an illumination system, such as a back lightning system for the lollipop and/or the wrapping. This preferred embodiment is especially useful, if the means to analyze are a camera, because the contours of the lollipop and/or the wrapping are enhanced by the backlight.

Preferably, the lollipops are transported by transportation means which transport the lollipops passed the means to analyze. While the lollipops are in the vicinity of the means to analyze, the respective property is measured. The properties are measured preferably during the motion of the lollipop.

These transportation means can comprise clamping means, which fix the lollipop to the transportation means.

Preferably, these clamping means are used as means to activate the means to analyze, so that the analysis is carried out, while the lollipop is in the vicinity of the means to analyze. Furthermore or alternatively, the clamping means can be used as a reference-location for the analyzing means, so that the analyzing means know where the analysis should be carried out.

Preferably, the position of the transportation means is tracked during its motion, especially if they carry the lollipop, which should be sorted out. Due to the tracking of position the clamping means, the inventive machine knows, when the clamping machines are, for example, on top of a disposal bin, so that they can release the false lollipop into the disposal bin. In case of a stop and a restart of the inventive machine it is also important that the location of the clamping means with false lollipops are known.

The invention is now explained according to figures 1 to 4. These explanations do not limit the scope of protection.
- **Figure 1**: shows a front view of the inventive machine.
- **Figure 2**: shows a side view of the inventive machine.
- **Figure 3**: shows a wrapped lollipop clamped by clamping means.
- **Figure 4**: shows a non-wrapped lollipop clamped by the clamping means.

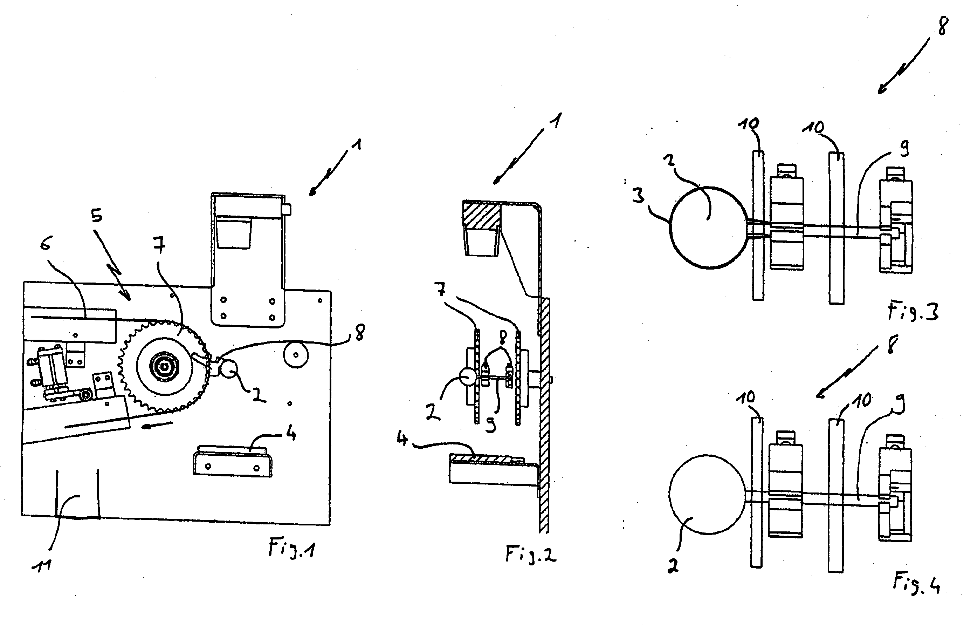

**Figure 1** shows the inventive machine, which comprises transportation means 5. These transportation means 5 are in the present example sprockets 7 which drive chains 6. On these chains 6 clamping means 8 are arranged, which clamp a lollipop, in the present case the stick 9 of a lollipop 2. The lollipops 2 are transported by the transportation machines continuously as depicted by the arrow. During their transportation, they are transported passed means to analyze them, in the present example, a camera 1. Below the lollipop and the camera an illumination system 4, a backlight, is arranged, which illuminates the lollipop as well as the stick in order to improve their contours for the camera 1. The lollipop 2 is located between the illumination system 4 and the camera 1.

**Figure 2** shows a side view of the machine according to figure 1. It can be clearly seen, that there are two sprockets 7 which drive chains (not depicted), to which several clamping means 8 are fixed.

**Figure 3** shows the clamping means 8, which clamp the stick 9 of a lollipop 2, which is wrapped by a plastic film 3. Furthermore, in this picture, two measuring areas 10 can be seen. One is in the vicinity of the unwrapped stick and one is in the vicinity of the lollipop where the wrapping material is twisted around the stick and sealed. In these measuring areas, the camera and a software combined with the camera measures the widths, respectively. If the width closed to the lollipop is not larger than the width of the stick, the conclusion is drawn by the software that the lollipop is not wrapped and has to be sorted out. In the present case the width measured near the lollipop is larger than the width of the stick, so that it is concluded that the lollipop is wrapped an consequently considered to be a "good" lollipop. However, not only the presence of a wrapping but also the quality of the sealing can be, for example, measured by the camera 1. If the width measure close to the lollipop is larger than the width of the stick, but does not exceed a certain value, the conclusion can be drawn, that the twisting is too tight and/or that the sealing of the twisting is too intense. These lollipops are also sorted out, because they cannot be easily opened by the customer. Sorted out are also lollipops which comprise a width close to the lollipop which is too large. In this case a wrapping is present but the twisting of the wrapping material and/or its sealing is incomplete so that it is likelihood that the wrapping will fall off is high.

**Figure 4** shows a lollipop which is not wrapped. The inventive machine will realise, that in both measurement areas the measured width is the same and will conclude that the lollipop is unwrapped. Consequently, the position of this clamping means is tracked and as soon as it is located over bin 11 (please compare figure 1), the lollipop is released into the bin.

The person skilled in the art understands that the machine cannot only measure whether a wrapping is in place and whether the wrapping is carried out correctly. The analyzing means 1 can also analyze whether the lollipop has a correct shape and/or color. The same is true for the wrapping material. The camera can analyze whether correct wrapping material has been used and whether a label is present, if needed. In case that the analyzing means 1 are not a camera, but for example roentgen means, also the interior of the lollipop can be analyzed.

Furthermore, the analyzing means can comprise a temperature measurement to measure whether the lollipop has a correct temperature.

### List of reference signs:

- 1: Analyzing means, vision system, radiation-scanner, radiation sensor
- 2: lollipop
- 3: wrapping
- 4: illumination system
- 5: transportation means
- 6: chain
- 7: sprocket
- 8: clamping means
- 9: stick
- 10: measurement area

## Claims

1. Lollipop wrapping-machine, wherein it comprises means (1) to analyze the wrapping (3) of the lollipop (2), **characterized in, that** the folding and the sealing of the wrapping material is analyzed and that the analyzing means (1) also measure at least one property of the lollipop (2).

2. Lollipop wrapping-machine according to claim 1, **characterized in, that** the means (1) provide a signal, which is used to control a sorting process.

3. Lollipop wrapping-machine according to claim 2, characterized that badly wrapped lollipops are sorted out.

4. Lollipop wrapping-machine according to claim 2 or 3, **characterized in, that** the lollipops are sorted according to the signal of the means (1).

5. Lollipop wrapping-machine according to one of the preceding claims, **characterized in that** the means (1) is a vision system, a radiation based surface-scanner and/or a radiation based volume-scanner.

6. Lollipop wrapping-machine according to one of the preceding claims, **characterized in, that** the analysis is 2 or 3-D.

7. Lollipop wrapping-machine according to claim 1, **characterized in, that** the measured property is compared to another measured property or a reference value and that the sorting is made based on the outcome of this comparison.

8. Lollipop wrapping-machine according to one of the preceding claims, **characterized in, that** it comprises an illumination system (4) for the wrapping.

9. Lollipop wrapping-machine according to one of the preceding claims, **characterized in, that** the lollipop is transported by transportation means (5, 7, 8).

10. Lollipop wrapping-machine according to claim 9, **characterized in, that** the transportation means (8) are taken as means to activate the analyzing means. (1).

11. Lollipop wrapping-machine according to one of claims 9 or 10, **characterized in, that** the location of the transportation means (8) is tracked.

12. Lollipop wrapping-machine according to one of claims 9 -11, **characterized in, that** false lollipops are released over a disposal bin (11).

## Patentansprüche

1. Stielbonbon-Einwickelmaschine, die Mittel (1) zum Analysieren der Einwicklung (3) des Stielbonbons (2) umfasst, **dadurch gekennzeichnet, dass** das Falten und Versiegeln des Einwickelmaterials analysiert wird, und dass die Analysiermittel (1) auch mindestens eine Eigenschaft des Stielbonbons (2) messen.

2. Stielbonbon-Einwickelmaschine nach Anspruch 1, **dadurch gekennzeichnet, dass** die Mittel (1) ein Signal bereitstellen, das zum Steuern eines Sortierverfahrens verwendet wird.

3. Stielbonbon-Einwickelmaschine nach Anspruch 2, **dadurch gekennzeichnet**, das schlecht eingewickelte Stielbonbons aussortiert werden.

4. Stielbonbon-Einwickelmaschine nach Anspruch 2 oder 3, **dadurch gekennzeichnet, dass** die Stielbonbons gemäß dem Signal der Mittel (1) sortiert werden.

5. Stielbonbon-Einwickelmaschine nach einem der vorherigen Ansprüche, **dadurch gekennzeichnet, dass** die Mittel (1) ein Sichtsystem, ein strahlungsbasierter Oberflächenabtaster und/oder ein strahlungsbasierter Volumenabtaster sind.

6. Stielbonbon-Einwickelmaschine nach einem der vorherigen Ansprüche, **dadurch gekennzeichnet, dass** die Analyse in 2 D oder 3 D erfolgt.

7. Stielbonbon-Einwickelmaschine nach Anspruch 1, **dadurch gekennzeichnet, dass** die gemessene Eigenschaft mit der anderen gemessenen Eigenschaft oder einem Referenzwert verglichen wird, und dass die Sortierung basierend auf dem Ergebnis dieses Vergleichs durchgeführt wird.

8. Stielbonbon-Einwickelmaschine nach einem der vorherigen Ansprüche, **dadurch gekennzeichnet, dass** diese ein Beleuchtungssystem (4) für die Einwicklung umfasst.

9. Stielbonbon-Einwickelmaschine nach einem der vorherigen Ansprüche, **dadurch gekennzeichnet, dass** das Stielbonbon mithilfe von Transportmitteln (5, 7, 8) transportiert wird.

10. Stielbonbon-Einwickelmaschine nach Anspruch 9, **dadurch gekennzeichnet, dass** die Transportmittel (8) als Mittel zum Aktivieren der Analysiermittel (1) genommen werden.

11. Stielbonbon-Einwickelmaschine nach einem der Ansprüche 9 oder 10, **dadurch gekennzeichnet, dass** der Standort der Transportmittel (8) nachverfolgt wird.

12. Stielbonbon-Einwickelmaschine nach einem der Ansprüche 9 bis 11, **dadurch gekennzeichnet, dass** falsche Stielbonbons in einen Abfalleimer (11) abgegeben werden.

## Revendications

1. Machine à emballer les sucettes, comprenant des moyens (1) pour analyser l'emballage (3) de la sucette (2), **caractérisée en ce que** le pliage et le scellage du matériau d'emballage sont analysés et **en ce que** les moyens d'analyse (1) mesurent aussi au moins une propriété de la sucette (2).

2. Machine à emballer les sucettes selon la revendication 1, **caractérisée en ce que** les moyens (1) fournissent un signal qui est utilisé pour commander un processus de tri.

3. Machine à emballer les sucettes selon la revendication 2, **caractérisée en ce que** des sucettes mal emballées sont éliminées par triage.

4. Machine à emballer les sucettes selon la revendication 2 ou 3, **caractérisée en ce que** les sucettes sont triées en fonction du signal des moyens (1).

5. Machine à emballer les sucettes selon l'une quelconque des revendications précédentes, **caractérisée en ce que** le moyen (1) est un système de vision, un scanner de surface utilisant les radiations et/ou un scanner de volume utilisant les radiations.

6. Machine à emballer les sucettes selon l'une quelconque des revendications précédentes, **caractérisée en ce que** l'analyse est bi- ou tridimensionnelle.

7. Machine à emballer les sucettes selon la revendication 1, **caractérisée en ce que** la propriété mesurée est comparée à une autre propriété mesurée ou une valeur de référence et **en ce que** le tri est effectué sur la base du résultat de cette comparaison.

8. Machine à emballer les sucettes selon l'une quelconque des revendications précédentes, **caractérisée en ce qu'**elle comprend un système d'éclairage (4) pour l'emballage.

9. Machine à emballer les sucettes selon l'une quelconque des revendications précédentes, **caractérisée en ce que** la sucette est transportée par des moyens de transport (5, 7, 8).

10. Machine à emballer les sucettes selon la revendication 9, **caractérisée en ce que** les moyens de transport (8) sont utilisés en tant que moyens pour activer les moyens d'analyse (1).

11. Machine à emballer les sucettes selon l'une quelconque des revendications 9 ou 10, **caractérisée en ce que** l'emplacement des moyens de transport (8) est suivi.

12. Machine à emballer les sucettes selon l'une quelconque des revendications 9 à 11, **caractérisée en ce que** des fausses sucettes sont lâchées au-dessus d'une poubelle (11).
